# FASCICULE DE BREVET EUROPEEN

(11) **EP 1 902 904 B1**
(45) Date de publication et mention de la délivrance du brevet: **02.12.2009**
(21) Numéro de dépôt: 07291129.0
(22) Date de dépôt: 24.09.2007
(51) Int. Cl.: B60R 13/08, B32B 5/18

(54) **Composant d'insonorisation pour structure ayant un espace d'air entre un élément extérieur et un organe structurel**
Schalldämmkomponente mit einem Luftzwischenraum zwischen einem Außenelement und einem Strukturbauteil
Soundproofing component for a structure having an air space between an outer element and a structural organ

(30) Priorité: 25.09.2006 FR 0608386
(43) Date de publication de la demande: 26.03.2008
(73) Titulaire: Faurecia Automotive Industrie, 92000 Nanterre (FR)
(72) Inventeur: Deshayes, Guillaume, 08210 Sedan (FR); Duval, Arnaud, 08000 Charleville-Mézières (FR)
(74) Mandataire: Domenego, Bertrand

(56) Documents cités:
- WO-A-99/58371
- WO-A1-98/18657
- JP-A- 5 333 865
- US-A- 6 145 617

## Description

La présente invention concerne un composant d'insonorisation d'une structure délimitant un espace d'air entre un élément hermétique, tel qu'un élément décoratif ou un plancher structurel, et un organe structurel rigide, par exemple de tôle.

US 6 145 617 décrit un composant selon le préambule de la revendication 1.

Un tel composant d'insonorisation, essentiellement destiné aux véhicules, notamment automobiles, doit donner de bonnes propriétés acoustiques, notamment d'isolation, dans toute la gamme de fréquences intéressante.

L'insonorisation recouvre divers phénomènes qui sont essentiellement l'amortissement, l'isolation et l'absorption acoustiques. Une "isolation" empêche l'entrée d'ondes acoustiques à moyennes et hautes fréquences dans l'espace insonorisé, essentiellement par réflexion des ondes vers les sources de bruit ou l'extérieur de l'espace insonorisé. Une "absorption acoustique" (dans le domaine des moyennes et hautes fréquences) dissipe l'énergie des ondes acoustiques dans un matériau absorbant.

Il existe dans les véhicules de nombreuses parties dans lesquelles des espaces d'air sont délimités entre deux organes, le plus souvent rigides. On peut citer les planchers structurels, les planchers de coffre, les montants de porte, le tableau de bord, les panneaux de porte, les revêtements de passage de roue, etc. Les cavités délimitées par ces organes posent souvent un problème de bruit, et il est donc avantageux d'assurer une insonorisation de telles cavités.

On peut considérer, uniquement pour mieux faire comprendre l'invention, le cas de l'insonorisation d'un plancher structurel rigide, par exemple à double paroi, porté par un organe structurel rigide, en général formé de tôle.

On a déjà incorporé, dans une partie de la cavité délimitée entre le plancher structurel et l'organe structurel rigide, une couche de feutre ou de mousse placée du côté du plancher ou du côté de l'organe rigide. Bien que cette solution n'augmente que faiblement le poids, elle est peu efficace aux hautes fréquences et notamment à la fréquence critique de l'organe hermétique constitué par le plancher.

On a donc envisagé d'utiliser un système masse-ressort classique dans lequel une couche de masse lourde est associée à une couche formant ressort, par exemple de mousse. Un tel système masse-ressort dont la partie de masse lourde comporte deux couches est décrit dans le document GB-2 163 388. Il a l'avantage d'être très efficace, surtout par isolation acoustique. Cependant, un tel système présente l'inconvénient d'augmenter notablement le poids du composant, et, lorsqu'il a l'efficacité voulue aux moyennes fréquences, il est excessivement efficace aux hautes fréquences.

Selon l'invention, l'efficacité d'insonorisation obtenue avec une simple couche de feutre ou de mousse est considérablement accrue par association à cette couche d'une couche à résistance contrôlée au passage de l'air, les deux couches ayant des résistances au passage de l'air qui sont différentes. Ces deux couches forment un "complexe d'insonorisation", et ce complexe est associé à un espace d'air, entre deux organes hermétiques.

On connaît déjà, d'après le document WO 98/18 657, un système d'insonorisation qui comprend un complexe d'insonorisation constitué d'au moins deux couches ayant des résistances différentes au passage de l'air, placé à proximité d'une tôle dont le complexe est séparé partiellement par une couche d'air. Cette couche a une épaisseur très réduite et le complexe est à de nombreux emplacements directement au contact de la tôle. Selon l'invention, l'espace d'air est au moins égal à 2 cm et est de préférence de l'ordre d'une dizaine de centimètres. En outre, par rapport à ce système connu, le composant d'insonorisation selon l'invention comporte une surface hermétique, c'est-à-dire dont la résistance au passage de l'air est infinie.

Grâce à ces caractéristiques, un effet important d'insonorisation peut être obtenu avec un poids réduit. Plus précisément, la solution selon l'invention tire avantage de l'absorption acoustique assurée par le complexe d'insonorisation, de la présence de la couche d'air et de l'isolation assurée par la couche hermétique pour éviter l'utilisation d'une couche lourde. En conséquence, un composant d'insonorisation selon l'invention, pour des caractéristiques acoustiques pratiquement identiques à celles d'un système classique, permet une réduction de poids de l'ordre de 30 %, jusqu'aux fréquences atteignant 2,5 kHz auxquelles l'oreille humaine est particulièrement sensible.

Lorsqu'une couche du complexe d'insonorisation est formée d'un non-tissé à résistance contrôlée au passage de l'air, une bonne résistance au passage de l'air peut être obtenue avec un non-tissé de très faible masse surfacique (de l'ordre de 20 à 200 g/m²), donnant un très faible poids, tout en permettant un accord du spectre d'absorption.

Plus précisément, l'invention concerne un composant d'insonorisation pour structure délimitant un espace d'air entre un élément extérieur et un organe structurel rigide ; selon l'invention, le composant comporte une couche pratiquement hermétique et, entre l'organe structurel rigide et la couche pratiquement hermétique, un complexe d'insonorisation constitué d'au moins deux couches ayant des résistances au passage de l'air qui sont différentes, et l'espace d'air restant entre le complexe et soit l'élément extérieur, soit l'organe structurel rigide a une épaisseur supérieure à 2 cm.

De préférence, la couche pratiquement hermétique est intégrée à l'élément extérieur, celui-ci pouvant être normalement hermétique.

De préférence, le complexe comprend une première couche choisie parmi une mousse et un feutre, et une seconde couche ayant une résistance contrôlée au passage de l'air. Par exemple, la première couche est un feutre phénolique, et/ou la seconde couche du complexe est un non-tissé.

Dans un mode de réalisation, le complexe est adjacent à l'organe structurel rigide, et l'espace d'air est adjacent à la couche pratiquement hermétique, et la couche pratiquement hermétique est constituée par l'élément extérieur.

Dans un autre mode de réalisation, le complexe est adjacent à la couche pratiquement hermétique et l'espace d'air est adjacent à l'organe structurel rigide, et la couche pratiquement hermétique est constituée par une feuille.

Dans des exemples, l'élément extérieur est choisi parmi un élément décoratif et un plancher structurel, et le plancher structurel est notamment du type à double paroi.

Dans une application, l'organe structurel rigide est un passage de roue d'automobile. Dans ce cas notamment, il est avantageux que la feuille hermétique soit associée à un non-tissé aiguilleté.

Suivant la forme du composant, le complexe d'insonorisation constitué d'au moins deux couches ayant des résistances au passage de l'air qui sont différentes est thermoformé.

D'autres caractéristiques et avantages de l'invention seront mieux compris à la lecture de la description qui va suivre d'exemples de réalisation, faite en référence au dessin annexé sur lequel :
la figure 1 est une coupe schématique d'un composant d'insonorisation selon l'invention ; et
la figure 2 est une vue schématique en coupe partielle de l'application d'un composant d'insonorisation selon l'invention à un passage de roue d'automobile.

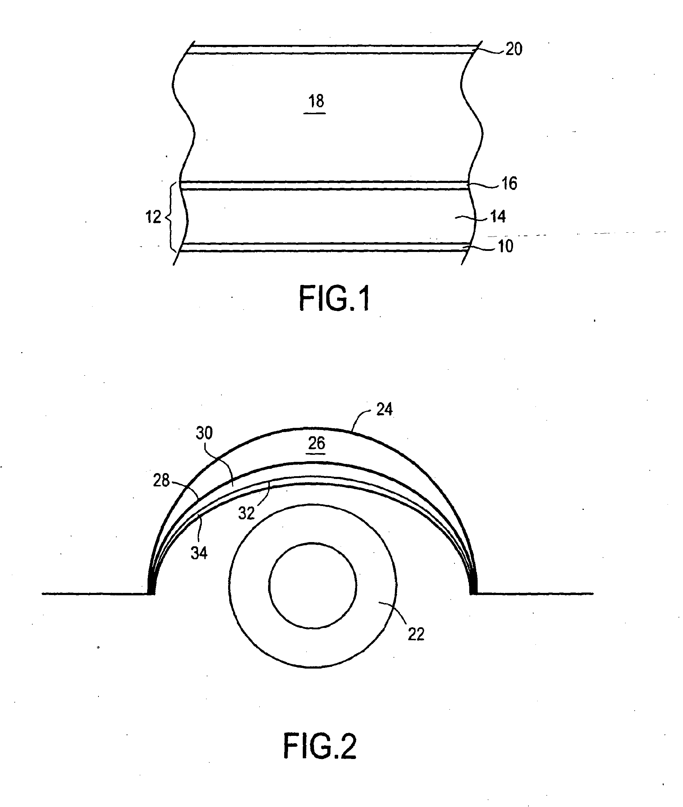

La figure 1 représente un composant d'insonorisation selon l'invention associé à une tôle d'acier 10, couramment utilisée pour la fabrication des automobiles. Un complexe d'insonorisation 12 est disposé sur la tôle 10 et à son contact.

Ce complexe 12 comprend un feutre 14, par exemple un feutre phénolique. Il comporte aussi une couche 16 ayant une résistance réglée au passage de l'air, par exemple formée d'un non-tissé.

Un espace d'air 18 est formé entre le complexe d'insonorisation 12 et un plancher structurel 20. Ce plancher structurel 20 est rigide et pratiquement hermétique. Une moquette peut être placée sur le plancher structurel 20.

Dans un exemple, la tôle d'acier 10 a une épaisseur de 0,8 mm, le feutre phénolique a une épaisseur de 20 mm et une masse surfacique de 0,9 kg/m² le non-tissé a une masse surfacique d'environ 0,13 kg/m², l'espace d'air a une épaisseur de 108 mm, et le plancher structurel 20 est formé d'un plancher à double paroi constitué de couches thermo-formées contenant, en quantités analogues, des fibres de verre et des fibres d'une polyoléfine.

Bien qu'on ait indiqué que la couche 14 du complexe 12 était formée d'un feutre phénolique, des couches de mousse ou d'autres feutres conviennent aussi.

Bien qu'on ait indiqué que la couche 16 ayant une résistance contrôlée au passage de l'air était formée d'un non-tissé, elle peut être constituée d'autres matériaux, notamment d'un feutre ayant une résistance au passage de l'air différente de celle du feutre de la couche 14.

Bien qu'on ait représenté le complexe 12 adjacent à la tôle 10, une disposition inverse peut être utilisée, c'est-à-dire une disposition dans laquelle la couche d'air 18 est adjacente à la tôle 10. La figure 2 illustre une telle application.

La figure 2 représente schématiquement une partie d'une carrosserie d'automobile au voisinage d'une roue 22 placée dans un passage de roue 24, cette partie étant formée par une tôle. Le composant d'insonorisation est fixé à ses extrémités à la tôle.

Le composant comprend, à partir de la tôle 24 formant un organe structurel rigide, un espace d'air 26 ayant, dans sa partie centrale, une épaisseur au moins égale à 10 cm, puis un complexe d'insonorisation comprenant une couche 28 ayant une résistance contrôlée au passage de l'air et une couche 30 d'une mousse ou d'un feutre. Le complexe d'insonorisation est adjacent à une feuille hermétique 32 qui est associée à une couche 34 formée par exemple d'un non-tissé aiguilleté ou d'une nappe textile, capable de résister aux chocs des éléments projetés par la roue et aux projections d'eau lors du déplacement du véhicule. Si la couche 34 est hermétique, la feuille 32 est superflue.

Ainsi, dans le mode de réalisation de la figure 2, le composant d'insonorisation est placé vers l'extérieur du véhicule, par rapport à la tôle 24 du passage de roue. Le plus souvent, par exemple dans le cas d'un plancher structurel, le composant d'insonorisation est placé à l'intérieur du véhicule par rapport à la tôle 10 formant l'organe structurel rigide.

Ainsi, l'invention concerne l'obtention d'un effet important d'insonorisation obtenu par combinaison, entre deux organes hermétiques, d'un espace d'air et d'un complexe d'insonorisation comprenant deux couches ayant des résistances au passage de l'air qui sont différentes, l'espace et le complexe étant disposés dans un ordre quelconque entre les deux organes hermétiques. Cet effet comprend une absorption acoustique surtout due au complexe d'insonorisation et à la présence de la couche d'air et une isolation surtout due aux couches hermétiques, obtenues sans utilisation d'une couche lourde.

Cet effet est obtenu avec un poids réduit.

## Revendications

1. Composant d'insonorisation pour structure délimitant un espace d'air (18, 26) entre un élément extérieur (20, 34) et un organe structurel rigide (10, 24), que le composant comportant une couche pratiquement hermétique et, entre l'organe structurel rigide (10, 24) et la couche pratiquement hermétique, un complexe d'insonorisation (12 ; 28, 30) constitué d'au moins deux couches (14, 16 ; 28, 30) ayant des résistances au passage de l'air qui sont différentes, **caractérisé en ce que** l'espace d'air (18, 26), restant entre le complexe (12) et un organe choisi parmi l'élément extérieur (20, 34) et l'organe structurel rigide (10, 24), a une épaisseur supérieure à 2 cm.

2. Composant d'insonorisation selon la revendication 1, **caractérisé en ce que** la couche pratiquement hermétique est intégrée à l'élément extérieur (20).

3. Composant d'insonorisation selon l'une des revendications 1 et 2, **caractérisé en ce que** le complexe (12) comprend une première couche (14, 30) choisie parmi une mousse et un feutre, et une seconde couche (16, 28) ayant une résistance contrôlée au passage de l'air.

4. Composant d'insonorisation selon la revendication 3, **caractérise en ce que** la seconde couche (16, 28) du complexe est un non-tissé.

5. Composant d'insonorisation selon l'une quelconque des revendications 1 à 4, **caractérisé en ce que** le complexe (12) est adjacent à l'organe structurel rigide (10), et l'espace d'air (18) est adjacent à la couche pratiquement hermétique, et la couche pratiquement hermétique est constituée par l'élément extérieur (20).

6. Composant d'insonorisation selon l'une quelconque des revendications 1 à 4, **caractérisé en ce que** le complexe est adjacent à la couche pratiquement hermétique et l'espace d'air (26) est adjacent à l'organe structurel rigide (24), et la couche pratiquement hermétique est constituée par une feuillue (32).

7. Composant d'insonorisation selon la revendication 6, **caractérisé en ce que** la feuille hermétique (32) est associée à un non-tissé aiguilleté (34).

8. Composant d'insonorisation selon la revendication 7, **caractérisé en ce que** l'organe structurel rigide (24) est un passage de roue d'automobile.

9. Composant d'insonorisation selon l'une quelconque des revendications précédentes, **caractérisé en ce que** élément extérieur (20, 34) est choisi parmi un élément décoratif et un planche structurel.

10. Composant d'insonorisation selon l'une quelconque des revendications précédentes, **caractérisé en ce que** le complexe d'insonorisation (12) constitué d'au moins deux couches ayant des résistances au passage de l'air qui sont différentes est thermoformé.

## Claims

1. Sound-proofing component for a structure delimiting an air space (18, 26) between an outer element (20, 34) and a rigid structural part (10, 24), the component comprising a practically hermetic layer and, between the rigid structural part (10, 24) and the practically hermetic layer, a sound-proofing composite (12; 28, 30) composed of at least two layers (14, 16; 28, 30) having resistances to the passage of air which are different, **characterised in that** the air space (18, 26) remaining between the composite (12) and a part selected from the outer element (20, 34) and the rigid structural part (10, 24) has a thickness greater than 2 cm.

2. Sound-proofing component according to claim 1, **characterised in that** the practically hermetic layer is integrated into the outer element (20).

3. Sound-proofing component according to one of claims 1 and 2, **characterised in that** the composite (12) comprises a first layer (14, 30) selected from a foam and a felt, and a second layer (16, 28) having a controlled resistance to the passage of air.

4. Sound-proofing component according to claim 3, **characterised in that** the second layer (16, 28) of the composite is a non-woven.

5. Sound-proofing component according to any one of claims 1 to 4, **characterised in that** the composite (12) is adjacent to the rigid structural part (10), and the air space (18) is adjacent to the practically hermetic layer, and the practically hermetic layer is constituted by the outer element (20).

6. Sound-proofing component according to any one of claims 1 to 4, **characterised in that** the composite is adjacent to the practically hermetic layer and the air space (26) is adjacent to the rigid structural part (24), and the practically hermetic layer is constituted by a foil (32).

7. Sound-proofing component according to claim 6, **characterised in that** the hermetic foil (32) is associated with a needled non-woven (34).

8. Sound-proofing component according to claim 7, **characterised in that** the rigid structural part (24) is an automobile wheel housing.

9. Sound-proofing component according to any one of the preceding claims, **characterised in that** the outer element (20, 34) is selected from a decorative element and a structural floor.

10. Sound-proofing component according to any one of the preceding claims, **characterised in that** the sound-proofing composite (12) composed of at least two layers having resistances to the passage of air which are different is thermoformed.

## Patentansprüche

1. Schalldämpfungsbauteil für eine Struktur, die einen Luftraum (18, 26) zwischen einem äußeren Element (20, 34) und einem starren strukturellen Organ (10, 24) begrenzt, wobei das Bauteil eine praktisch hermetisch dichte Schicht und einen zwischen dem starren strukturellen Organ (10, 24) und der praktisch hermetisch dichten Schicht angeordneten schalldämpfenden Komplex (12, 28, 30), der aus mindestens zwei einen unterschiedlichen Widerstand gegenüber dem Luftdurchzug aufweisenden Schichten (14, 16; 28, 30) umfasst, **dadurch gekennzeichnet, dass** der zwischen dem schalldämpfenden Komplex (12) und einem Organ, das zwischen dem äußeren Element (20, 34) und dem starren strukturellen Organ (10, 24) gewählt wurde, verbleibende Luftraum (18, 26) eine Stärke aufweist, die größer als 2 cm ist.

2. Schalldämpfungsbauteil nach dem Anspruch 1, **dadurch gekennzeichnet, dass** die praktisch hermetisch dichte Schicht in dem äußeren Element (20) integriert ist.

3. Schalldämpfungsbauteil nach einem der Ansprüche 1 und 2, **dadurch gekennzeichnet, dass** der Komplex (12) eine erste zwischen einem Schaum und einem Filz gewählte Schicht (14, 30) und eine zweite einen kontrollierten Widerstand gegenüber dem Luftdurchzug aufweisenden Schicht (16, 28) umfasst.

4. Schalldämpfungsbauteil nach dem Anspruch 3, **dadurch gekennzeichnet, dass** die zweite Schicht (16, 28) des Komplexes aus einem Flor besteht.

5. Schalldämpfungsbauteil nach irgendeinem der vorangehenden Ansprüche 1 bis 4, **dadurch gekennzeichnet, dass** der Komplex (12) an dem starren strukturellen Organ (10) anliegt und dass der Luftraum (18) an der praktisch hermetischen Schicht anliegt, und dass die praktisch hermetisch dichte Schicht durch das äußere Element (20) gebildet ist.

6. Schalldämpfungsbauteil nach irgendeinem der vorangehenden Ansprüche 1 bis 4, **dadurch gekennzeichnet, dass** der Komplex an der praktisch hermetisch dichten Schicht anliegt und dass der Luftraum (26) an dem starren strukturellen Organ (24) anliegt, und dass die praktisch hermetisch dichte Schicht durch eine Folie (32) gebildet ist.

7. Schalldämpfungsbauteil nach dem Anspruch 6, **dadurch gekennzeichnet, dass** die hermetisch dichte Folie (32) einem Nadelflor (34) zugeordnet ist.

8. Schalldämpfungsbauteil nach dem Anspruch 7, **dadurch gekennzeichnet, dass** das starre strukturelle Organ (24) ein Radkasten ist.

9. Schalldämpfungsbauteil nach irgendeinem der voran gehenden Ansprüche, **dadurch gekennzeichnet, dass** das äußere Element (20, 34) zwischen einem dekorativen Element und einem strukturellem Boden gewählt wird.

10. Schalldämpfungsbauteil nach irgendeinem der vorangehenden Ansprüche, **dadurch gekennzeichnet, dass** der schalldämpfende Komplex (12), der durch mindestens zwei Schichten gebildet ist, die einen unterschiedlichen Widerstand gegenüber einem Luftdurchzug aufweisen, thermisch geformt ist.
